# EUROPÄISCHE PATENTANMELDUNG

(11) **EP 0 674 130 A1**
(43) Veröffentlichungstag der Anmeldung: **27.09.1995**
(21) Anmeldenummer: 95101455.4
(22) Anmeldetag: 03.02.1995
(51) Int. Cl.: F16L 55/05

(54) **Störfall-Schutzvorrichtung**

(30) Priorität: 26.03.1994 DE 4410616
(71) Anmelder: PAGG Produktions AG Giswil, CH-6074 Giswil (CH)
(72) Erfinder: Selb, Hanspeter, CH-6375 Beckenried (CH)
(74) Vertreter: Brommer, Hans Joachim, Dr.-Ing.

(57) **Zusammenfassung**

Die Erfindung betrifft eine Vorrichtung zum Schutz von mediumführenden Anlagen bei Störfällen mit unzulässiger Druckzunahme wie Explosionen und dergleichen, wobei die Anlage zumindest eine Druckentlastungsöffnung (5) mit Verschlußelement (4) aufweist und das Verschlußelement (4) die Öffnung (5) im störungsfreien Zustand verschließt, während sie diese im Störzustand freigibt. Damit das unter Umständen hochgiftige Medium bei einem solchen Störfall nicht in die Atmosphäre abgeblasen wird, ist an die Druckentlastungsöffnung (5) ein gasdichter Auffangbehälter (3) mit bei Druckbeaufschlagung ausdehnbarem Reservoirraum angeschlossen.

## Beschreibung

Die Erfindung betrifft eine Vorrichtung zum Schutz von mediumführenden Anlagen bei Störfallen mit unzulässiger Druckzunahme, wobei die Anlage zumindest eine Druckentlastungsöffnung mit Verschlußelement aufweist und das Verschlußelement die Druckentlastungsöffnung im störungsfreien Zustand verschließt, im Störzustand dagegen freigibt.

Zum Schutz von Anlagen vor exothermen Reaktionen und Störfällen mit starker Druckzunahme sind verschiedene mehr oder weniger aufwendige Verfahren bekannt. So kann beispielsweise die Apparatur explosionsgefährdeter Anlagen druckstoßfest bis auf einen zu erwartenden Höchstdruck ausgelegt werden und eine Abschottung einzelner Anlagenteile durch Schnellschlußventile erfolgen, was jedoch relativ teuer ist und somit nicht für alle Einsatzgebiete in Frage kommt. Es ist außerdem möglich, zur Explosionsunterdrückung Löschmittel in die Anlagen einzuschießen, was aber ähnlich aufwendig und insbesondere zur Anwendung im Lebensmittelherstellungs- und Pharmabereich nicht unproblematisch ist.

Als einfachstes Mittel zum Schutz vor unkontrollierten exothermen Reaktionen hat sich aber bisher das Versehen kritischer Anlagenteile mit Verschlußelementen wie Berstscheiben, Überdruck- oder Schnellöffnungsventilen durchgesetzt, wodurch im Störfall bei über vorgegebenen Werten liegenden Druckzunahmen die Anlage in die Atmosphäre entlüftet wird.

Die Problematik dieser Schutzvorrichtungen aus einfachen Verschlußelementen ist jedoch in letzter Zeit immer mehr zum Vorschein gekommen, da zwar die Anlagen selbst vor den exothermen Reaktionen geschützt werden konnten, jedoch ganze Stadtteile den bei den Störfällen austretenden, teilweise hochgiftigen Stoffen ausgesetzt waren. Da es nicht mehr vertretbar sein wird, in Zukunft weiter diese Art von einfacher Schutzvorrichtung nach dem Prinzip der Verlagerung des Problems aus der Anlage heraus in die Atmosphäre bzw. Umwelt zu verwenden, liegt die Aufgabe der vorliegenden Erfindung darin, die bekannten Vorrichtungen zum Schutz von mediumführenden Anlagen bei Störfällen mit unzulässiger Druckzunahme durch einfache Mittel zu verbessern und insbesondere eine Entlastung des in der Anlage enthaltenen, unter Umständen hochgiftigen Mediums in die Atmosphäre zu verhindern.

Diese Aufgabe wird erfindungsgemäß dadurch gelöst, daß an die Durckentlastungsöffnung ein gasdichter Auffangbehälter mit bei Druckbeaufschlagung ausdehnbarem Reservoirraum angeschlossen ist. Hierdurch läßt sich die bei einem Störfall auftretende Druck- und Volumenzunahme auffangen, ohne daß die Anlagenteile hoch belastet werden oder das Medium in die Atmosphäre gelangt und ohne daß im störungsfreien Zustand von einem derartigen Auffangbehälter unnötiger Platz in Anspruch genommen wird.

Besonders vorteilhaft ist die Tatsache, daß die bisher verwendeten Schutzvorrichtungen in Form von Verschlußelementen weiterverwendet und in einfacher Weise nachgerüstet werden können, um zum Vorteil der vorliegenden Erfindung zu gelangen.

In jedem Fall muß der zur Verfügung stehende Reservoirraum der möglichen Fehlreaktion entsprechen, was aber über die stöcheometrische Gleichung der Fehlreaktion unter Berücksichtigung der Temperaturerhöhung während der Reaktion einfach zu berechnen ist. Darüber hinaus muß zweckmäßigerweise im Bereich der Druckentlastungsöffnung ein dem Reservoirraum entsprechender Freiraum zur Verfügung stehen, in den sich der Auffangbehälter bei Druckbeaufschlagung ausdehnen kann.

Für die Gestaltung des Auffangbehälters sind verschiedene Ausführungen denkbar: So kann dieser zweckmäßigerweise aus flexiblem Material, aus einem teleskopartig ausfahrbaren Zylinder oder aus einem Balg oder einem ähnlich zusammenlegbaren bzw. zusammenfaltbaren Körper bestehen. Jede Ausführungsform weist gewisse Vorteile auf, anhand derer die jeweils erforderliche Materialart auszuwählen ist. So zeichnet sich beispielsweise ein zusammenlegbarer Auffangbehälter durch geringste Ausdehnungswiderstände aus, während beispielsweise bei teleskopartig ausfahrbaren Zylindern ein Wiederherstellen des Ausgangszustandes nach dem Störfall in einfacher Weise durch Zusammenfahren des Teleskopzylinders möglich ist.

Anstatt den Auffangbehälter nach einem Störfall und nach Entleerung und Reinigung der Anlage wieder zusammenzufahren bzw. -zulegen, ist es aufgrund der einfachen Ausführungsform der erfindungsgemäßen Auffangbehälter ebenso möglich, diesen durch einen neuen zu ersetzen, was auch aus sicherheitstechnischen Gründen angeraten sein kann.

Darüber hinaus ist es je nach Anwendungsfall zweckmäßig, wenn der Auffangbehälter aus feuerfestem oder aus druckfestem Material besteht, um den jeweiligen Explosions- bzw. Reaktionsrisiken angepaßt zu sein. Ebenso kann es sinnvoll sein, daß dem Auffangbehälter eine Flammensperre beispielsweise in Form eines Gitters vorgeschaltet ist.

Vorteilhafterweise ist der Auffangbehälter im vom Medium abgeschotteten, also störungsfreien Zustand in einem Schutzbehälter aufbewahrt, aus dem heraus er sich bei Druckbeaufschlagung zumindest teilweise ausdehnt. So ist der Auffangbehälter vor Beschädigung und Funktionsbeeinträchtigung geschützt.

Auch für das Verschlußelement sind verschiedene Ausführungsformen denkbar: So kann dieses beispielsweise aus einer Berstscheibe bestehen, die nur einem bestimmten Druck standhält und bei Überdruck durch Zerstörung quasi selbsttätig öffnet. Darüber hinaus ist es möglich, als Verschlußelement einen Schieber, insbesondere einen Schnellöffnungsschieber auszuwählen, der mit Hilfe von die Anlage überwachenden Detektoren (zum Beispiel Infrarot- und Druckdetektoren) gesteuert wird.

Bei Verwendung von Schiebern, die im Störzustand die Druckentlastungsöffnung freigeben, ist es besonders vorteilhaft, wenn durch einen sogenannten Doppelschieber gleichzeitig die Verbindung zwischen störungsbefallenem und restlichem Anlagenteil verschlossen wird. Dies kann zweckmäßigerweise dadurch erfolgen, daß in jedem kritischen Anlagenbereich ein eigener Auffangbehälter vorgesehen ist, Schieber im Störzustand die benachbarten Anlagenteile abschotten und gleichzeitig die Druckentlastungsöffnung zum Auffangbehälter freimachen.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: eine erfindungsgemäße Schutzvorrichtung bestehend aus einem zusammenfaltbaren Auffangbehälter mit Schieber im störungsfreien Zustand;
- Figur 2: den Auffangbehälter aus Figur 1 im ausgedehnten Zustand nach Druckbeaufschlagung infolge eines Störfalls; und
- Figur 3: eine schematische Darstellung einer explosionsgefährdeten Anlage mit jedem kritischen Anlagenteil zugeordneten erfindungsgemäßen Auffangbehältern und Berstscheiben.

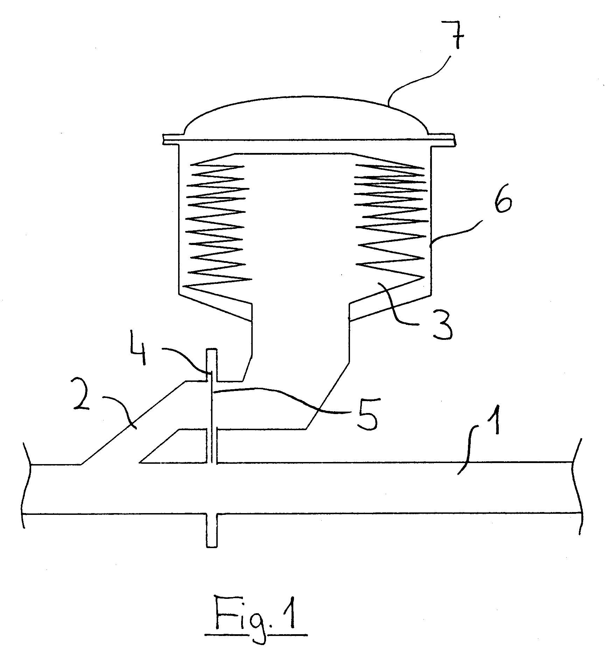

In Figur 1 ist ein Rohrleitungsabschnitt 1 einer explosionsgefährdeten Anlage dargestellt mit einer Rohrverzweigung 2, an die ein erfindungsgemäßer zusammenlegbarer Auffangbehälter angeschlossen ist. In der Verzweigungsleitung 2 noch vor dem Auffangbehälter befindet sich ein Verschlußelement 4 in Form eines Schnellöffnungsschiebers, durch den im störungsfreien Zustand eine Druckentlastungsöffnung 5, die dem Rohrverzweigungsdurchmesser entspricht, verschlossen wird.

Der Schieber 4 ist in der Verzweigungsleitung 2 so angeordnet, daß er im Störfall, wenn er die Druckentlastungsöffnung 5 freigibt, gleichzeitig den Rohrleitungsabschnitt 1 verschließt und somit einen über den Rohrleitungsabschnitt 1 angeschlossenen, benachbarten Anlagenteil gegen die zum Störfall führende Reaktion abschottet, also als Doppelschieber fungiert.

In einem solchen Störfall wird der überhöhte Druck durch die Druckentlastungsöffnung 5 in den Auffangbehälter 3 weitergeleitet, der jedoch entlang seines Umfangs von einem starren Schutzbehälter 6 umgeben ist, wodurch eine Ausdehnung des Auffangbehälters 3 in Umfangsrichtung nicht möglich ist. Allerdings weist der Schutzbehälter 6 an seiner Oberseite einen abnehmbaren Deckel 7 auf, der aufgrund seines leichten Gewichtes und seiner einfachen Verschwenkbarkeit keinen großen Widerstand gegen die Ausdehnungstendenz des Auffangbehälters 3 darstellt.

Somit drückt der in der Rohrverzweigung herrschende überhöhte Druck den Auffangbehälter 3 in Richtung des Deckels 7 nach oben und verschwenkt diesen entgegen seiner Gewichtskraft aus dem Ausdehrungsbereich des Auffangbehälters 3 heraus zur Seite. Hierauf kann sich der Auffangbehälter 3 größtenteils aus dem Schutzbehälter 6 in den Freiraum über dem Schutzbehälter entfalten, wodurch der zusätzlich geschaffene Reservoirraum den überhöhten Druck aufnehmen und abbauen kann.

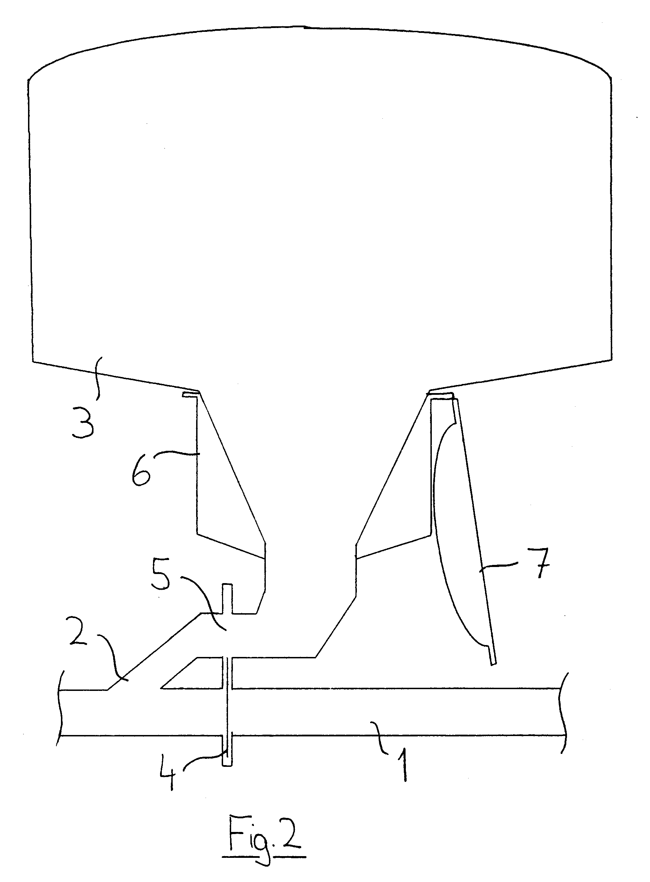

Ein demgemäß entfalteter Auffangbehälter 3 ist in Figur 2 dargestellt. Dort ist außerdem zu erkennen, daß sich der Deckel 7 in der verschwenkten Offenstellung befindet und der Doppelschieber 4 in der Position, in dem er die Druckentlastungsöffnung 5 freigibt und den über die Rohrleitung 1 angeschlossenen benachbarten Anlagenteil abkoppelt. Es ist leicht ersichtlich, daß durch einen derartigen, fast beliebig groß wählbaren Auffangbehälter beinahe jede unzulässige Druckzunahme aufgefangen und abgebaut werden kann, und daß gleichzeitig ein abgeschlossenes Reservoir zur Verfügung gestellt wird, wodurch das in der Anlage enthaltene Medium sicher von der Umgebung getrennt ist.

Nach Auftreten eines Störfalls würde zweckmäßigerweise der expandierte Auffangbehälter gereinigt, evakuiert und wieder im Schutzbehälter zusammengelegt, sowie der Schieber 4 in die die Verzweigungsleitung 2 verschließende Position zurückgestellt und der Schutzbehälter 6 mit dem zugehörigen Deckel 7 verschlossen.

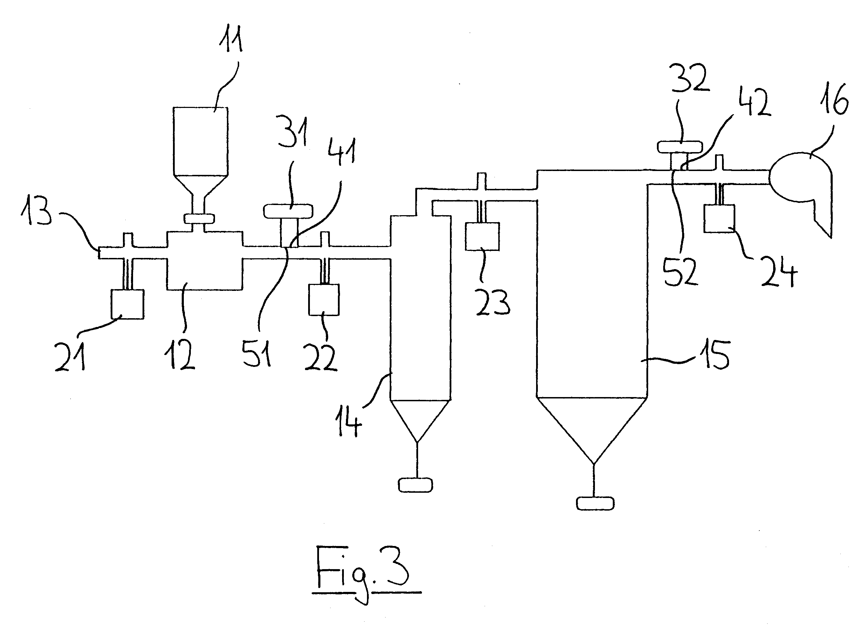

In Figur 3 ist als Beispiel für eine explosionsgefährdete Anlage eine einfache Mahlanlage dargestellt, die aus einem Granulatbehälter 11, einer Mühle 12, einer Reinluftzufuhrleitung 13, einem Pulverabscheider 14, einem Filter 15 und einem Ventilator 16 besteht. Das in der Mühle 12 gemahlene Granulat wird hierbei mit Hilfe der Reinluft in den Pulverabscheider 14 geblasen, von wo die verbleibenden Stoffe in den Filter 15 gelangen, aus dem die gereinigte Luft durch den Ventilator 16 ausgeblasen wird.

Entstehen nun bei der Verarbeitung des Granulats brennbare Stäube oder Gase, so können durch Funkenbildung Brände oder Explosionen verursacht werden. Gefährdet ist hierbei insbesondere die Mühle, in der auf die Mahlwalzen treffende Fremdkörper eine Funkenbildung verursachen können, außerdem der Filter 15 aufgrund elektrostatischer Aufladungen und auch der Ventilator 16, in dem durch Reibung der Ventilatorflügel an der Ummantelung oder durch heißgelaufene Lager Zündquellen entstehen können.

Um die kritischen Anlagenteile gegeneinander bzw. gegen die Umwelt abzuschotten, werden Schnellschlußschieber 21, 22, 23 und 24 vorgesehen, die bei Druck- oder Temperaturerhöhung sofort schließen; und zwar wird die Mühle 12 durch den Schnellschlußschieber 21 von der Reinluftzufuhr und durch den Schnellschlußschieber 22 vom Pulverabscheider abgeschottet, während der Filter 15 durch den Schnellschlußschieber 23 vom Pulverabscheider 14 und durch den Schnellschlußschieber 24 vom Ventilator 16 trennbar ist.

Durch den sehr eng begrenzten verbleibenden Raum im Bereich der Mühle 12 zwischen den Schnellschlußschiebern 21 und 22 ist offensichtlich, daß eine Druckerhöhung infolge einer exothermen Reaktion nicht einfach vom Rohrleitungs- bzw. Anlagenbaumaterial aufgefangen werden kann. Aus diesem Grund ist ein Auffangbehälter 31 an eine Druckentlastungsöffnung 51 in dem Rohrleitungsabschnitt zwischen Mühle 12 und Schnellschlußschieber 22 angeschlossen. Im störungsfreien Zustand wird die Druckentlastungsöffnung 51 durch eine Berstscheibe 41 verschlossen, die jedoch bei Überdruck zerstört wird und den zusätzlichen ausdehnbaren, vom Auffangbehälter 31 gebildeten Reservoirraum freigibt.

In gleicher Weise ist ein Auffangbehälter 32 zwischen Filter 15 und Schnellschlußschieber 24 an einer Druckentlastungsöffnung 52 der Rohrleitung angeschlossen, wobei die Druckentlastungsöffnung 52 im störungsfreien Zustand ebenfalls durch eine Berstscheibe 42 verschlossen wird.

Die Auffangbehälter 31 und 32, die in Figur 3 nur schematisch angedeutet sind, müssen auf der Basis der zu erwartenden chemischen Reaktion, der Menge des reagierenden Produktes und deren Temperatur so ausgelegt sein, daß sie die Druckzunahme aufnehmen und durch zusätzlichen Reservoirraum ausgleichen können.

## Patentansprüche

1. Vorrichtung zum Schutz von mediumführenden Anlagen bei Störfällen mit unzulässiger Druckzunahme, wobei die Anlage zumindest eine Druckentlastungsöffnung mit Verschlußelement aufweist und das Verschlußelement die Öffnung im störungsfreien Zustand verschließt, im Störzustand dagegen freigibt,
dadurch gekennzeichnet,
daß an die Druckentlastungsöffnung (5, 51, 52) ein gasdichter Auffangbehälter (3, 31, 32) mit bei Druckbeaufschlagung ausdehnbarem Reservoirraum angeschlossen ist.

2. Vorrichtung zum Schutz von mediumführenden Anlagen nach Anspruch 1,
dadurch gekennzeichnet,
daß der Auffangbehälter (3, 31, 32) aus flexiblem Material besteht.

3. Vorrichtung zum Schutz von mediumführenden Anlagen nach Anspruch 1,
dadurch gekennzeichnet,
daß der Auffangbehälter (3, 31, 32) aus einem teleskopartig ausfahrbaren Zylinder besteht.

4. Vorrichtung zum Schutz von mediumführenden Anlagen nach Anspruch 1,
dadurch gekennzeichnet,
daß der Auffangbehälter (3, 31, 32) aus einem Balg oder einem zusammenlegbaren bzw. -faltbaren Körper besteht.

5. Vorrichtung zum Schutz von mediumführenden Anlagen nach Anspruch 1,
dadurch gekennzeichnet,
daß der Auffangbehälter (3, 31, 32) aus feuerfestem Material besteht.

6. Vorrichtung zum Schutz von mediumführenden Anlagen nach Anspruch 1,
dadurch gekennzeichnet,
daß der Auffangbehälter (3, 31, 32) aus druckfestem Material besteht.

7. Vorrichtung zum Schutz von mediumführenden Anlagen nach Anspruch 1,
dadurch gekennzeichnet,
daß der Auffangbehälter (3, 31, 32) im vom Medium abgeschotteten Zustand in einem Schutzbehälter (6, 7) aufbewahrt ist und sich bei Druckbeaufschlagung zumindest teilweise aus diesem heraus ausdehnt.

8. Vorrichtung zum Schutz von mediumführenden Anlagen nach Anspruch 1,
dadurch gekennzeichnet,
daß dem Auffangbehälter (3, 31, 32) eine Flammensperre vorgeschaltet ist.

9. Vorrichtung zum Schutz von mediumführenden Anlagen nach Anspruch 1,
dadurch gekennzeichnet,
daß das Verschlußelement (4, 41, 42) aus einer Berstscheibe besteht.

10. Vorrichtung zum Schutz von mediumführenden Anlagen nach Anspruch 1,
dadurch gekennzeichnet,
daß das Verschlußelement (4, 41, 42) aus einem Schieber insbesondere einem Schnellöffnungsschieber besteht.

11. Vorrichtung zum Schutz von mediumführenden Anlagen nach Anspruch 10,
dadurch gekennzeichnet,
daß der Schieber (4), der im Störzustand die Druckentlastungsöffnung freigibt, gleichzeitig die Verbindung zwischen störbefallenem und restlichem Anlagenteil verschließt.
